Europäisches Patentamt

European Patent Office

Office européen des brevets

(11) Veröffentlichungsnummer : **0 123 852**
**B1**

# (12) EUROPÄISCHE PATENTSCHRIFT

(45) Veröffentlichungstag der Patentschrift :
08.07.87

(21) Anmeldenummer : 84102886.3

(22) Anmeldetag : 16.03.84

(51) Int. Cl.⁴ : **C 08 J 3/12, C 09 D 3/48,
B 29 B 9/00, B 01 J 8/38**

(54) Verfahren zum Abrunden von Kunststoffkörpern.

(30) Priorität : 02.04.83 DE 3312026

(43) Veröffentlichungstag der Anmeldung :
07.11.84 Patentblatt 84/45

(45) Bekanntmachung des Hinweises auf die Patenterteilung : 08.07.87 Patentblatt 87/28

(84) Benannte Vertragsstaaten :
DE FR GB

(56) Entgegenhaltungen :
DE-A- 1 778 517
GB-A- 1 362 870

(73) Patentinhaber : **Resicoat GmbH Beschichtungspulver
Tübinger Strasse 123
D-7410 Reutlingen (DE)**

(72) Erfinder : **Knecht, Armin
Planie 7
D-7410 Reutlingen (DE)**

(74) Vertreter : **Röser, Peter
c/o Robert Bosch GmbH Robert-Bosch-Platz 1
D-7016 Gerlingen-Schillerhöhe (DE)**

## Beschreibung

### Stand der Technik

Die Erfindung geht aus von einem Verfahren nach der Gattung des Hauptanspruchs. Feingemahlene Kunststoffpulver wie z. B. Pulverlacke haben eine kantige Kornform. Das führt dazu, daß sie in vielen Fällen nur ungenügende Fließeigenschaften aufweisen und daß auch die elektrostatischen Eigenschaften, wie sie bei der elektrostatischen Pulverbeschichtung eine Rolle spielen, nicht optimal sind. Bei metallpigmenthaltigen Pulverlacken ist darüber hinaus noch nachteilig, daß sich in der Rückgewinnungsanlage, der das unverbrauchte Pulver wieder zugeführt wird, diese von dem Pulver trennen, so daß eine Homogenisierung des Pulvers vor einem Wiedereinsatz notwendig ist. Ein Einkneten dieser Metallpigmente in den Pulverlack ist nachteilig, da die Metallpigmente durch die dabei auf sie einwirkenden Kräfte geschädigt werden.

### Vorteile der Erfindung

Das erfindungsgemäße Verfahren zum Abrunden der Körner von Kunststoffpulvern besteht darin, daß das Kunststoffpulver in einer ersten Behandlungszone einer Wirbelschicht mit Heißluft und dann in einer anschließenden zweiten Behandlungszone mit Kaltluft fluidisiert wird, wobei das Kunststoffpulver kontinuierlich aufgegeben und entnommen wird. Dies hat den Vorteil, daß das dabei entstehende Pulver durch die bei der Durchführung des Verfahrens entstandene abgerundete Form der Körner hervorragende Fließeigenschaften erhält und durch das Fehlen von Spitzen und Kanten die elektrostatischen Eigenschaften dieser Körper verbessert werden, da das elektrische Feld über das ganze Korn hinweg praktisch gleichmäßig verteilt wird. Als Nebeneffekt verringert sich auch noch der Feinstkornanteil, da die Partikel dieses Anteils zu einem gewissen Anteil auf die größeren Partikel aufschmelzen. Ein besonderer Vorteil ist darin zu sehen, daß dieses Verfahren kontinuierlich durchgeführt werden kann und sich daher in ausgezeichneter Weise in eine Fertigungsstraße zur Herstellung von Pulverlack integrieren läßt.

Durch die in den Unteransprüchen aufgeführten Maßnahmen sind vorteilhafte Weiterbildungen und Verbesserungen des im Hauptanspruch angegeben Verfahrens möglich. So kann die Wirbelschicht vorteilhaft in einer schräg gestellten Rinne mit einem Fluidboden erzeugt und das Kunststoffpulver an der höchsten Stelle der Rinne kontinuierlich aufgegeben und an der tiefsten Stelle der Rinne entnommen werden, wobei sich die erste Behandlungszone in dem höher gelegenen Teil und die zweite Behandlungszone in dem tiefer gelegenen Teil der Rinne befindet. Statt in einer Rinne kann die Wirbelschicht auch in einem schräg gestellten porösen Rohr erzeugt werden, wobei die Heißluft und die Kaltluft über ein stationäres, das poröse Rohr umgebendes zweites Rohrzugeführt wird. Die Behandlungszonen sind wie oben beschrieben angeordnet. Auf diese Weise wird das Kunststoffpulver mit Hilfe der Schwerkraft durch die beiden Behandlungszonen transportiert, was die kontinuierliche Durchführung des Verfahrens erleichtert. Bei der Ausführungsform mit der Rinne ist es empfehlenswert, die Flächen, die mit dem Kunststoffpulver in Berührung kommen — mit Ausnahme des Fluidbodens — zu kühlen. Im Falle des gleichzeitigen Vorhandenseins von Metallpigmenten ist es besonders vorteilhaft, in der ersten Behandlungszone einen Schnellmischer in dem Wirbelbett vorzusehen, da auf diese Weise das Aufschmelzen der Metallpigmente auf die einzelnen Körner begünstigt wird. Um eine ausreichende Verweilzeit des Kunststoffpulvers in der ersten Behandlungszone zu gewährleisten, ist es vorteilhaft, zwischen der ersten und der zweiten Behandlungszone den Querschnitt der Wirbelschicht zu verkleinern.

### Zeichnung

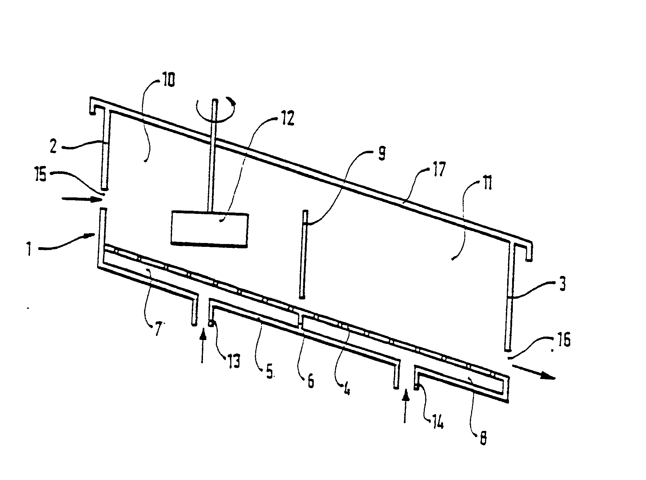

Ein Ausführungsbeispiel der Erfindung ist in der Zeichnung dargestellt und in der Beschreibung näher erläutert. Die Figur zeigt den Schnitt durch eine Vorrichtung, mit der das erfindungsgemäße Verfahren durchgeführt werden kann.

### Beschreibung des Ausführungsbeispiels

Die Vorrichtung zur Durchführung des Verfahrens besteht aus einer schräg gestellten Rinne 1, deren Querschnitt durch zwei Wände 2 und 3 abgeschlossen ist. Im unteren Teil weist die Rinne einen gasdurchlässigen Fluidboden 4 auf. Der Raum zwischen dem Fluidboden 4 und dem Boden 5 der Rinne 1 ist durch eine Wand 6 in zwei Gasräume 7 und 8 geteilt. Über der Wand 6 befindet sich in der Rinne 1 eine den Querschnitt der Rinne verkleinernde Wand 9, so daß innerhalb der Rinne eine erste Behandlungszone 10 und eine zweite Behandlungszone 11 gebildet werden.

Innerhalb der ersten Behandlungszone ist ein Schnellmischer 12 vorgesehen. Der Boden 5 weist im Bereich des Gasraums 7 sowie im Bereich des Gasraums 8 je einen Anschlußstutzen 13 für Heißluft bzw. 14 für Kaltluft auf. Die obere Wand 2 hat eine Öffnung 15 für die Pulverzufuhr, während die untere Wand 3 eine Öffnung 16 für den Pulverablauf aufweist. Die gesamte Rinne 1 ist mit einem Deckel 17 verschlossen.

Zur Durchführung des Verfahrens wird durch den Anschlußstutzen 13 Heißluft und durch den Anschlußstutzen 14 Kaltluft in die Gasräume 7 bzw. 8 geleitet, die durch den Fluidboden 4 hindurch in die Behandlungszonen 10 bzw. 11 gelangt. Dann wird durch die Öffnung 15 der feingemahlene Pulverlack zugeführt, der durch die von unten zugeführte Luft in den Behandlungszonen 10 und 11 unter Bildung einer Wirbelschicht in der Schwebe gehalten wird. Die Temperatur der durch den Stutzen 13 zugeführten Heißluft liegt zwischen 60 und 200 °C und hängt von der Art des zu behandelnden Pulvers ab. Die Temperatur der Heißluft sollte einige Grad über dem Beginn des Schmelzintervalls des Pulverlacks liegen. Nach Durchlaufen der ersten Behandlungszone 10 gelangt das aufgewirbelte Pulver an der Wand 9 vorbei in die zweite Behandlungszone 11, in der das Pulver mit Kaltluft von Raumtemperatur aufgewirbelt wird. Hier wird das Pulver abgekühlt und läuft schließlich über die Öffnung 16 ab. Die Abkühlung in der zweiten Behandlungszone 11 ist notwendig, um ein Zusammenbacken der einzelnen Körnchen des Pulvers zu vermeiden. Weist der Pulverlack Metallpigmente auf, so läßt man in der ersten Behandlungszone 10 den Schnellmischer rotieren, wodurch ein Aufschmelzen der Metallpigmente auf die Partikel des Pulverlacks begünstigt wird. Die Flächen 2, 3, 9, 17 werden gekühlt, damit der Pulverlack nicht aufschmilzt. Diese Kühlung, die in der Figur nicht dargestellt ist, erfolgt am einfachsten mittels Wasser, indem die Flächen doppelwandig ausgeführt werden und das Wasser durch die entstandenen Hohlräume geleitet wird.

Die Luftzufuhr in den Gasräumen 7 und 8 wird so eingestellt, daß die erzeugte Wirbelschicht etwa 2/3 der Höhe der Rinne einnimmt. Die übrigen Verfahrensparameter wie Temperatur der Heißluft, Verweilzeit in der ersten Behandlungszone 10, Pulverdurchsatz müssen empirisch für jede Pulversorte in Vorversuchen ermittelt werden. Die Verweilzeit in der ersten Behandlungszone 10 läßt sich in einfacher Weise durch die Größe der Wand 9 innerhalb der Rinne regulieren. Hier kann auch beispielsweise eine variable Blende eingebaut werden, die sich in einfacher Weise verstellen läßt. Entscheidend für die Wahl der Parameter ist einerseits eine ausreichende Abrundung der Körner des Kunststoffpulvers, andererseits darf die Temperatur der Heißluft nicht so hoch gewählt werden, daß die Teilchen zusammenbacken. Bei Pulverlacken spielt darüber hinaus noch eine Rolle, daß sie Harz und Härter im unreagierten Zustand enthalten, es sich also um ein metastabiles System handelt, bei dem vermieden werden muß, daß die Aushärtung des Systems während dieser Behandlung zu weitgehend ist.

Statt in der beschriebenen Rinne kann das Verfahren auch in einem sich drehenden, schräg gestellten porösen Rohr durchgeführt werden, wobei dieses poröse Rohr von einem zweiten, unterteilten Rohr umgeben ist, durch welches Heißluft und Kaltluft zugeführt werden.

**Patentansprüche**

1. Verfahren zum Abrunden der Körner von Kunststoffpulvern, insbesondere der Körner feingemahlener Pulverlacke, dadurch gekennzeichnet, daß das Kunststoffpulver in einer ersten Behandlungszone (10) einer Wirbelschicht mit Heißluft und dann in einer anschließenden zweiten Behandlungszone (11) mit Kaltluft fluidisiert wird, wobei das Kunststoffpulver kontinuierlich aufgegeben und entnommen wird.

2. Verfahren nach Anspruch 1, dadurch gekennzeichnet, daß die Wirbelschicht in einer schräg gestellten Rinne (1) mit einem Fluidboden (4) erzeugt wird und das Kunststoffpulver an der höchsten Stelle (15) der Rinne (1) kontinuierlich aufgegeben und an der tiefsten Stelle (16) der Rinne (1) entnommen wird, wobei sich die erste Behandlungszone (10) in dem höher gelegenen Teil und die zweite Behandlungszone (11) in dem tiefer gelegenen Teil der Rinne (1) befindet.

3. Verfahren nach Anspruch 2, dadurch gekennzeichnet, daß die Rinne (1) oben durch einen Deckel (17) abgeschlossen wird.

4. Verfahren nach Anspruch 2 oder 3, dadurch gekennzeichnet, daß alle Flächen mit Ausnahme des Fluidbodens (4), die mit dem Kunststoffpulver in Berührung kommen, gekühlt werden.

5. Verfahren nach Anspruch 1, dadurch gekennzeichnet, daß die Wirbelschicht in einem schräg gestellten porösen Rohr erzeugt wird, wobei die Heißluft und die Kaltluft über ein stationäres, das poröse Rohr umgebendes zweites Rohr zugeführt wird, und daß das Kunststoffpulver an der höchsten Stelle der porösen Rohres kontinuierlich aufgegeben und an der tiefsten Stelle dem porösen Rohr entnommen wird, wobei sich die erste Behandlungszone in dem höher gelegenen Teil und die zweite Behandlungszone in dem tiefer gelegenen Teil des porösen Rohres befindet.

6. Verfahren nach Anspruch 5, dadurch gekennzeichnet, daß das poröse Rohr gedreht wird.

7. Verfahren nach einem der vorhergehenden Ansprüche, dadurch gekennzeichnet, daß zwischen der ersten Behandlungszone (10) und der zweiten Behandlungszone (11) der Querschnitt der Rinne (1) bzw. des porösen Rohres verkleinert wird.

8. Verfahren nach Anspruch 7, dadurch gekennzeichnet, daß zur Verkleinerung des Querschnitts der Rinne (1) bzw. des porösen Rohres zwischen der ersten und der zweiten Behandlungszone eine in der Mitte ein Loch aufweisende Blende oder eine am Umfang einen Spalt freilassende Zwischenwand (9) vorgesehen wird.

9. Verfahren nach einem der vorhergehenden Ansprüche, dadurch gekennzeichnet, daß im Fall des gleichzeitigen Aufbringens von Metallpigmenten auf die Körner des Kunststoffpulvers in der ersten Behandlungszone (10) ein Schnellmischer (12) in dem Wirbelbett vorgesehen wird.

**Claims**

1. Process for rounding the grains of plastic powders, in particular the grains of finely ground powder finishes, characterized in that the plastic powder is fluidized with hot air in a first treatment zone (10) of a fluidized bed and then with cold air in a downstream second treatment zone (11), the plastic powder being charged and discharged continuously.

2. Process according to Claim 1, characterized in that the fluidized bed is generated in an obliquely arranged channel (1) with a fluidizing grid (4) and the plastic powder is continuously charged at the highest point (15) of the channel (1) and discharged at the lowest point (16) of the channel (1), the first treatment zone (10) being located in the higher part and the second treatment zone (11) being located in the lower part of the channel (1).

3. Process according to Claim 2, characterized in that the channel (1) is closed at the top by a cover (17).

4. Process according to Claim 2 or 3, characterized in that, with the exception of the fluidizing grid (4) all surfaces coming into contact with the plastic powder are cooled.

5. Process according to Claim 1, characterized in that the fluidized bed is generated in an obliquely arranged perforated pipe, the hot air and the cold air being fed via a fixed second pipe surrounding the perforated pipe, and that the plastic powder is continuously charged at the highest point of the perforated pipe and discharged at the lowest point of the perforated pipe, the first treatment zone being located in the higher part and the second treatment zone being located in the lower part of the perforated pipe.

6. Process according to Claim 5, characterized in that the perforated pipe is rotated.

7. Process according to one of the preceding Claims, characterized in that the cross-section of the channel (1) of the perforated pipe is reduced between the first treatment zone (10) and the second treatment zone (11).

8. Process according to Claim 7, characterized in that, for reducing the cross-section of the channel (1) or of the perforated pipe, a screen having a hole in the middle or a partition (9) leaving a gap on the periphery is provided between the first and the second treatment zone.

9. Process according to one of the preceding Claims, characterized in that, in the case of simultaneous application of metal pigment to the grains of the plastic powder, a high-speed mixer (12) is provided in the first treatment zone (10) in the fluidized bed.

**Revendications**

1. Procédé d'arrondissage des grains de poudres de matière synthétique, notamment les grains de laque en poudre finement moulue, caractérisé en ce que la poudre de matière synthétique est fluidifiée dans une première zone de traitement (10) d'une couche turbulente avec de l'air chaud, puis dans une seconde zone de traitement (11) lui faisant suite avec de l'air froid, la poudre de matière synthétique étant introduite et soutirée en continu.

2. Procédé selon la revendication 1, caractérisé en ce que la couche turbulente est produite dans une goulotte (1) placée obliquement, pourvue d'un fond fluidique (4), et la poudre de matière synthétique est introduite en continu à l'endroit le plus haut (15) de la goulotte (1) et soutirée à l'endroit le plus bas (16) de la goulotte (1), la première zone de traitement (10) se situant alors dans la partie haute de la goulotte (1) et la seconde zone de traitement (11) dans la partie basse de cette goulotte (1).

3. Procédé selon la revendication 2, caractérisé en ce que la goulotte (1) est fermée en haut par un couvercle (17).

4. Procédé selon la revendication 2 ou 3, caractérisé en ce que toutes les surfaces, à l'exception du fond fluidique (4), qui viennent en contact avec la poudre de matière synthétique, sont refroidies.

5. Procédé selon la revendication 1, caractérisé en ce que la couche turbulente est produite dans un tuyau poreux placé obliquement, l'air chaud et l'air froid étant alors amenés par l'intermédiaire d'un second tuyau, fixe, entourant le tuyau poreux, et en ce que la poudre de matière synthétique est introduite en continu à l'endroit le plus haut du tuyau poreux et soutirée à l'endroit le plus bas du tuyau poreux, la première zone de traitement se situant alors dans la partie haute du tuyau poreux et la seconde zone de traitement dans la partie basse de ce tuyau poreux.

6. Procédé selon la revendication 5, caractérisé en ce que l'on fait tourner le tuyau poreux.

7. Procédé selon l'une des revendications précédentes, caractérisé en ce que, entre la première zone de traitement (10) et la seconde zone de traitement (11), la section transversale de la goulotte (1) ou du tuyau poreux est diminuée.

8. Procédé selon la revendication 7, caractérisé en ce que, pour réduire la section transversale de la goulotte (1) ou du tuyau poreux, il est prévu entre la première et la seconde zone de traitement un écran présentant un trou au centre, ou une paroi intercalaire (9) laissant libre une fente sur le pourtour.

9. Procédé selon l'une des revendications précédentes, caractérisé en ce que, dans le cas de l'application simultanée de pigments métalliques sur les grains de la poudre de matière synthétique, il est prévu dans la première zone de traitement (10) un mélangeur rapide (12) dans le lit fluidisé.